# FASCICULE DE BREVET EUROPEEN

(11) **EP 3 853 157 B1**
(45) Date de publication et mention de la délivrance du brevet: **02.07.2025**
(21) Numéro de dépôt: 19794595.9
(22) Date de dépôt: 16.09.2019
(51) Int. Cl.: B65G 47/14, B65G 47/52, B65G 47/256, B29C 49/42

(54) **PROCÉDÉ DE TRIAGE DE PRÉFORMES INCORRECTEMENT POSITIONNÉES DANS UN DISPOSITIF D'ALIGNEMENT ET DE REDRESSEMENT DE PRÉFORMES**
VERFAHREN ZUM SORTIEREN VON FEHLERHAFT POSITIONIERTEN VORFORMEN IN EINER VORRICHTUNG ZUM AUSRICHTEN UND AUFRECHTSTÜTZEN VON VORFORMEN
METHOD FOR SORTING INCORRECTLY POSITIONED PREFORMS IN A PREFORM ALIGNMENT AND STANDING-UP DEVICE

(30) Priorité: 20.09.2018 FR 1858518
(43) Date de publication de la demande: 28.07.2021
(73) Titulaire: Sidel Participations, 76930 Octeville-sur-Mer (FR)
(72) Inventeur: MAZO, Eric, 76930 Octeville-sur-mer (FR); DEBRIS, Anthony, 76930 Octeville-sur-mer (FR)
(74) Mandataire: Sidel Group
(86) Numéro de dépôt international: PCT/FR2019/052144
(87) Numéro de publication internationale: WO 2020/058616

(56) Documents cités:
- CN-U- 201 485 036
- FR-A1- 3 035 090
- FR-A1- 3 035 090
- JP-A- 2013 234 010
- JP-A- 2013 234 010
- US-A1- 2015 041 282
- US-A1- 2015 041 282

## Description

### DOMAINE TECHNIQUE DE L'INVENTION

L'invention concerne un dispositif et un procédé d'alignement en une file et de redressement de préformes, le dispositif étant destiné à être appliqué à des préformes axisymétriques présentant un col séparé d'un corps par une face annulaire de support, le dispositif comportant un bol de centrifugeuse formé par :
- un plateau circulaire horizontal tournant autour d'un axe vertical ;
- une rambarde périphérique fixe ;
- au moins un secteur angulaire de redressement des préformes le long duquel le bol présente un interstice périphérique pour permettre le redressement de préformes alignées soutenues par leur face de support ;
- au moins un secteur de sortie agencé en aval dudit secteur angulaire de redressement selon le sens de rotation du plateau.

### ARRIERE PLAN TECHNIQUE DE L'INVENTION

Le dispositif est destiné à être mis en œuvre dans une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées, par exemple supérieures à 85000 bouteilles par heure.

Selon une technique bien connue, de tels récipients sont produits en deux étapes principales. Dans une première étape, on procède au moulage par injection ou par injection-compression d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient. Généralement, le col du récipient comporte un filetage ou une rainure.

La préforme comporte généralement une face annulaire de support qui fait saillie radialement vers l'extérieur par rapport au reste du corps et qui est orientée axialement vers l'extrémité fermée du corps. Une telle face de support est par exemple portée par une collerette de support annulaire qui s'étend radialement en saillie vers l'extérieur par rapport au reste de la préforme et qui est agencée à la base du col.

Il existe des installations dans lesquelles les préformes, une fois injectées, sont directement transmises vers la station de formage, chaque préforme étant transportée individuellement.

Toutefois, dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Dans le cas où la station d'injection et l'installation de fabrication par formage sont deux machines totalement indépendantes, les préformes sont généralement livrées en vrac. La station de soufflage dispose donc d'un dispositif d'alimentation en préformes qui est équipé d'un dispositif d'alignement en une file et de redressement des préformes. La présente invention concerne un tel dispositif.

On a déjà proposé un dispositif d'alignement et de redressement comportant un bol de centrifugeuse. Les préformes sont jetées en vrac sur un plateau tournant formant le fond du bol. Les préformes sont ensuite projetées par la force centrifuge contre une rambarde périphérique. Un espace radial réservé entre la rambarde et le plateau tournant permet le passage du corps des préformes tout en les retenant par leur collerette. Les préformes sont ainsi alignées à la périphérie du bol, leur axe principal présentant une orientation sensiblement verticale sous l'effet de la gravité.

De telles préformes alignées et redressées en une file seront par la suite appelées "préformes correctement positionnées".

Les préformes correctement positionnées sont ensuite entraînées vers une sortie tangentielle du bol sous l'effet du mouvement de rotation du plateau tournant.

Dans ce type de dispositif, certaines préformes ne sont pas correctement positionnées lorsqu'elles arrivent à proximité de la sortie du bol. Ces préformes incorrectement positionnées peuvent présenter un défaut d'alignement et/ou un défaut de redressement par rapport aux préformes correctement positionnées. Il s'agit par exemple de préformes couchées sur le plateau tournant ou de préformes emboîtées dans une préforme correctement positionnée. Ces préformes seront par la suite désignées par l'expression "préformes incorrectement positionnées". Pour permettre de trier les préformes incorrectement positionnées des préformes correctement positionnées, le dispositif connu comporte des moyens de triage qui sont agencés en aval d'un point de redressement des préformes correctement positionnées.

Les moyens de triage permettent le passage des préformes correctement positionnées en direction d'un secteur de sortie du bol de centrifugeuse. Un déflecteur protège la file de préformes correctement positionnées présentes dans le secteur angulaire de sortie de l'intrusion de préformes incorrectement positionnées.

Ces moyens de triage connus consistent en une roue démêleuse qui comporte des palettes montées à rotation autour d'un axe vertical. Les palettes balayent un espace situé au-dessus du plateau, à proximité immédiate de la file de préformes correctement positionnées pour expulser activement les préformes incorrectement positionnées vers le centre du plateau. Les préformes ainsi expulsées sont dirigées au début du secteur angulaire de redressement de manière à réaliser un nouveau tour de bol en espérant qu'elles seront correctement positionnées à leur prochain passage au niveau de la roue démêleuse.

Cependant, lorsque les préformes sont relativement massives, par exemple chaque préforme pèse au moins 19 grammes, et qu'elles alimentent le bol de centrifugeuse avec un débit élevé, par exemple à plus de 80000 préformes par heure, on a constaté que les préformes incorrectement positionnées pouvaient tarder à être expulsées. Ceci est susceptible de créer un blocage temporaire du défilement des préformes correctement positionnées au niveau de la roue démêleuse. Il s'ensuit que la file de préformes correctement positionnées présente, en sortie du dispositif, des discontinuités.

Certaines préformes correctement positionnées se retrouvent ainsi isolées des autres préformes de la file. Les préformes isolées ont tendance à se balancer dans l'axe de leur déplacement. Lorsque le balancement présente une amplitude trop importante, ceci peut entraîner un coincement de la préforme qui bloque alors le défilement des préformes suivantes.

En outre, lorsque les discontinuités s'étendent sur une distance trop longue, il est possible que les stations suivantes de l'installation ne soient pas alimentées correctement en préformes.

En outre, il arrive qu'une préforme soit incorrectement positionnée car elle est emboîtée dans une préforme correctement positionnée. Or, la roue démêleuse peut laisser passer une préforme incorrectement positionnée de cette façon. Ceci impose de disposer des moyens de triage supplémentaire pour garantir qu'aucune préforme ainsi positionnée ne franchisse la sortie du bol de centrifugeuse. Un procédé et un dispositif selon l'état de la technique sont connus de FR 3 035 090 A1.

### BREF RESUME DE L'INVENTION

L'invention propose un procédé de triage de préformes incorrectement alignée d'une file de préformes correctement positionnées dans un dispositif d'alignement en une file et de redressement de préformes qui comporte un bol de centrifugeuse formé par :
- un plateau circulaire horizontal tournant autour d'un axe vertical ;
- une rambarde périphérique fixe ;
- au moins un secteur angulaire de redressement des préformes le long duquel le bol présente un interstice périphérique pour permettre le redressement de préformes alignées par basculement d'un corps des préformes dans l'interstice tandis que le col est soutenu au-dessus de l'interstice ;
- au moins un secteur angulaire de sortie des préformes correctement positionnées qui est agencé en aval du secteur angulaire de redressement selon le sens de rotation du plateau ;
   caractérisé en ce que le procédé consiste à souffler au moins un jet de gaz comprimé depuis la périphérie extérieure du bol de centrifugeuse vers l'intérieur du bol de centrifugeuse.

Selon d'autres caractéristiques du procédé réalisé selon les enseignements de l'invention :
- le jet de gaz est émis selon une direction présentant au moins une composante radiale dirigée vers le centre du plateau, dite composante centripète, le jet de gaz passant au-dessus du col des préformes correctement positionnées pour chasser des préformes incorrectement positionnées vers le centre du plateau ;
- le jet de gaz est émis selon une direction présentant, en plus de la composante centripète, une composante tangentielle dirigée à contresens par rapport au sens de rotation du plateau ;
- le jet de gaz est soufflé depuis une zone située à proximité de l'extrémité aval du secteur de redressement ;
- le jet de gaz est soufflé de façon continue.

L'invention concerne aussi un dispositif d'alignement en une file et de redressement de préformes qui comporte un bol (20) de centrifugeuse formé par :
- un plateau (24) circulaire horizontal tournant autour d'un axe (B) vertical ;
- une rambarde (28) périphérique fixe ;
- au moins un secteur (20B) angulaire de redressement des préformes (12) le long duquel le bol (20) présente un interstice (34) périphérique pour permettre le redressement de préformes (12) alignées par basculement d'un corps (14) des préformes (12) dans l'interstice (34) tandis que le col (16) est soutenu au-dessus de l'interstice (34) ;
- au moins un secteur (20C) angulaire de sortie des préformes (12) correctement positionnées qui est agencé en aval du secteur (20B) angulaire de redressement selon le sens de rotation du plateau (24) ;
   caractérisé en ce qu'il comporte au moins un dispositif de soufflage qui comporte une buse de soufflage du jet de gaz comprimé qui est montée sur un élément de support fixe situé radialement à l'extérieur du bol et une source de gaz comprimé qui alimente la buse.

Selon d'autres caractéristiques du dispositif d'alignement et de redressement réalisé selon les enseignements de l'invention :
- le dispositif de soufflage comporte des moyens de régulation de la puissance du jet de gaz ;
- les moyens de régulation comportent un élément d'obturation réglable qui est agencé dans la buse pour modifier la section de passage du gaz ;
- l'élément d'obturation est monté coulissant ;
- la position de la buse de soufflage est réglable en hauteur par rapport à l'élément de support ;
- la buse comporte une chambre de pression qui débouche à l'extérieur par l'intermédiaire d'une fente de sortie horizontale qui s'étend depuis une paroi amont de la chambre de pression jusqu'à une extrémité libre de l'élément d'obturation, l'élément d'obturation étant monté coulissant horizontalement pour permettre de modifier la section de passage du gaz.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente schématiquement un dispositif d'alignement et de redressement de préformes comportant un bol de centrifugeuse conformément aux enseignements de l'invention ;
- la figure 2 est une vue de face qui représente une préforme adaptée pour être utilisée avec le dispositif de la figure 1, l'axe de la préforme étant ici orienté verticalement ;
- la figure 3 est une vue de dessus qui représente le bol de centrifugeuse de la figure 1 ;
- la figure 4 est une vue en coupe radiale d'un secteur d'alignement du bol de centrifugeuse de la figure 1 qui représente la rambarde périphérique et le plateau tournant du bol de centrifugeuse ainsi qu'une préforme alignée ;
- la figure 5 est une vue en perspective qui représente un déversoir du dispositif de la figure 1 ;
- la figure 6 est une vue de dessus qui représente une partie du secteur d'alignement du bol de centrifugeuse, ainsi que les différentes étapes du parcours d'une préforme déversée dans le bol de centrifugeuse ;
- la figure 7 est une vue en coupe radiale d'un secteur de redressement du bol de centrifugeuse de la figure 1 qui représente la rambarde périphérique et le plateau tournant du bol de centrifugeuse ainsi qu'une préforme alignée et redressée ;
- la figure 8 est une vue schématique selon une direction radiale qui représente une préforme alignée le long de la rambarde dans le secteur d'alignement du bol de centrifugeuse de la figure 1 ;
- la figure 9 est une vue de dessus de la figure 8 ;
- la figure 10 est une vue similaire à celle de la figure 8 qui représente la préforme de la figure 8 en cours de redressement au début du secteur de redressement du bol de centrifugeuse de la figure 1 ;
- la figure 11 est une vue de dessus de la figure 10 ;
- la figure 12 est une vue similaire à celle de la figure 10 qui représente la préforme de la figure 10 redressée dans le secteur de redressement du bol de centrifugeuse de la figure 1 ;
- la figure 13 est une vue de dessus de la figure 12 ;
- la figure 14 est une vue de dessus qui représente une zone du bol de centrifugeuse de la figure 1 située à cheval sur le secteur de redressement et sur un secteur de triage et qui comporte une buse de soufflage qui souffle un jet de gaz comprimé conformément aux enseignements de l'invention ;
- la figure 15 est une vue en coupe radiale verticale selon le plan de coupe 15-15 de la figure 14 qui représente le jet de gaz comprimé soufflé par la buse en direction d'une préforme incorrectement positionnée ;
- la figure 16 est une vue en perspective depuis l'intérieur du bol de centrifugeuse qui représente deux buses de soufflage réalisées conformément aux enseignements de l'invention ;
- la figure 17 est une vue en coupe horizontale selon le plan de coupe 17-17 de la figure 16 qui représente une chambre et une fente de sortie de la buse de soufflage ;
- la figure 18 est une vue en coupe radiale verticale selon le plan de coupe 18-18 de la figure 17 ;
- la figure 19 est une vue en coupe radiale verticale selon le plan de coupe 19-19 de la figure 17.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations locales suivantes pour chaque préforme présente dans le bol de centrifugeuse du dispositif ainsi que pour la buse du dispositif de soufflage :
- radiale "R" dirigée de l'intérieur vers l'extérieur depuis l'axe "B" de rotation du plateau 24 tournant ;
- tangentiel "T" qui est orthogonale à la direction radiale "R" et qui s'étend parallèlement au plan du plateau 24 tournant, dirigée d'amont en aval selon le sens de rotation du plateau 24 tournant ;
- verticale "V" dirigée parallèlement à l'axe "B" de rotation du plateau 24 tournant, de bas en haut selon le sens inverse de la gravité terrestre.

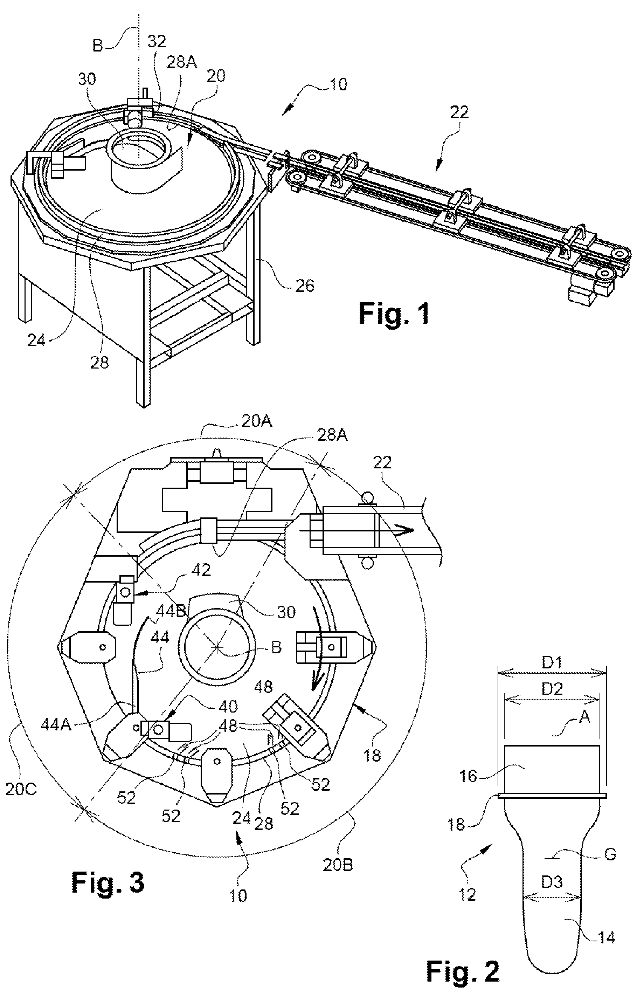

On a représenté à la figure 1 un dispositif 10 d'alignement en une file et de redressement de préformes 12 destiné à faire partie d'une installation (non représentée) de fabrication de récipient en matériau thermoplastique par formage, notamment par soufflage ou par étirage-soufflage, des préformes 12.

Un exemple de préforme 12 destinée à être utilisée avec le dispositif 10 d'alignement est illustré à la figure 2. Une telle préforme 12 est réalisée en matériau thermoplastique, ici en polyéthylène téréphtalate (PET). Elle est classiquement obtenue par moulage par injection. Elle présente une forme sensiblement axisymétrique autour d'un axe "A" principal représenté verticalement à la figure 2.

Elle comporte un corps 14 en forme de tube allongé selon l'axe "A" principal présentant une extrémité axiale fermée et qui présente à son extrémité opposée, représentée en haut à la figure 2, un col 16 ouvert axialement.

La préforme 12 comporte aussi une face 18 de support annulaire qui est orientée axialement vers l'extrémité fermée de la préforme 12, qui fait saillie radialement par rapport au reste du corps 14. La face 18 de support est agencée au-dessus d'un centre "G" de gravité de la préforme 12. Le terme "annulaire" signifie que la face 18 de support fait le tour de la préforme 12 soit de manière continue, comme cela est illustré à la figure 2, soit de manière discontinue (non représenté).

Lorsque la face de support est discontinue, la face annulaire est par exemple formée de segments disjoints qui font le tour de la préforme et qui sont néanmoins suffisamment rapprochés pour que la préforme puisse être soutenue entre deux supports diamétralement opposés quelle que soit la position de la préforme autour de son axe principal.

Dans l'exemple représenté à la figure 2, la base du col 16, à la jonction avec le corps 14, présente une collerette qui s'étend radialement en saillie par rapport au reste de la préforme 12. La face inférieure de la collerette forme ainsi ladite face 18 de support.

En variante non représentée, la collerette peut être agencée ailleurs qu'à la base du col, par exemple au niveau du buvant.

Selon une autre variante non représentée, la face de support est par exemple formée par une face inférieure d'un filetage du col.

Selon encore une autre variante non représentée, la face de support est rapportée sur la préforme, par exemple par l'intermédiaire d'un bouchon.

Le diamètre "D1" extérieur de la face 18 de support, dans le cas présent de la collerette, est ainsi supérieur au diamètre "D2" extérieur maximal du corps 14, situé ici directement sous la collerette. Dans l'exemple représenté à la figure 2, le tronçon d'extrémité fermée du corps 14 présente ici un diamètre "D3" extérieur minimal.

Le col 16 présente sa forme définitive, tandis que le corps 14 est destiné à être étiré lors d'une opération ultérieure de formage pour former le corps du récipient fini.

En outre, le poids du corps 14 des préformes 12 utilisées est supérieur au poids du col 16, incluant celui de la collerette. Le centre "G" de gravité de la préforme 12 est donc situé sous la face 18 de support en référence à la figure 2. Ainsi, une préforme 12 soutenue par sa face 18 de support en reposant sur deux supports diamétralement opposés s'orientera naturellement par gravité col 16 en haut.

L'exemple représenté à la figure 2 est non limitatif. On comprendra que le dispositif 10 d'alignement et le procédé associé sont destinés à être appliqué à tout type de préformes 12 présentant une face 18 de support faisant saillie radialement par rapport au reste du corps 14, et présentant un centre de gravité décalé axialement vers le corps par rapport à ladite face 18 de support.

Comme cela sera expliqué par la suite, le dispositif 10 d'alignement et de redressement est susceptible de traiter des lots de préformes identiques, le format des préformes étant susceptible de varier selon le lot. De ce fait, différents réglages sont susceptibles d'être effectués sur le dispositif 10 d'alignement et de redressement lors d'un changement de format de préforme.

En revenant à la figure 1, le dispositif 10 comporte principalement un bol 20 de centrifugeuse ainsi qu'un convoyeur 22 de sortie de la file des préformes correctement positionnées et redressées, dites par la suite "préformes correctement positionnées". Le convoyeur 22 de sortie est destiné à acheminer les préformes correctement positionnées pour les distribuer une par une à des moyens de prise en charge individuel de chaque préforme d'une station (non représentée) de traitement suivante de l'installation de fabrication, par exemple un four de chauffage des préformes 12.

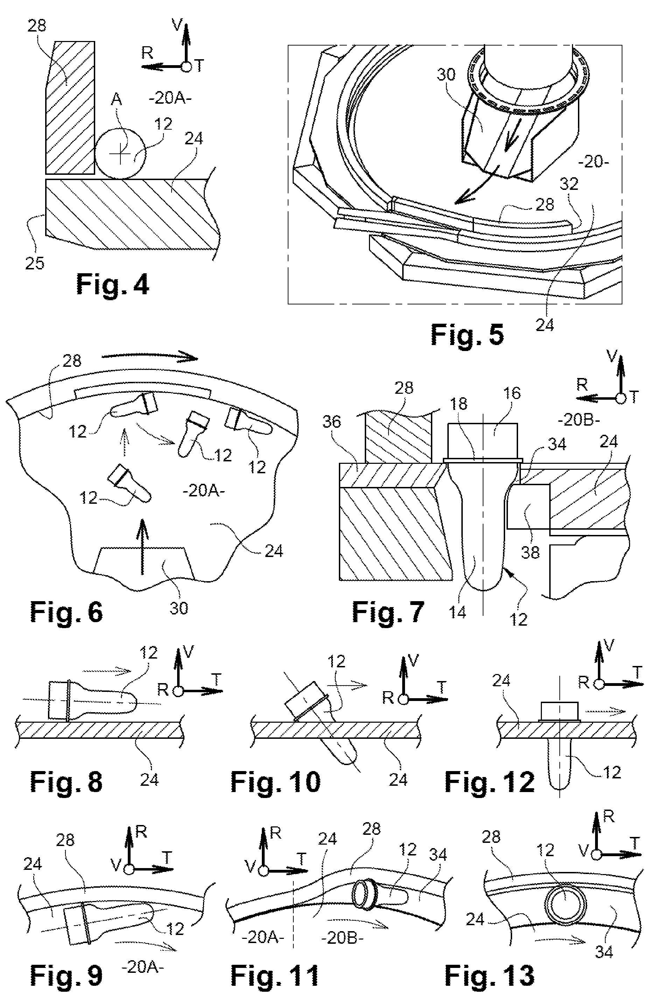

Le bol 20 de centrifugeuse comporte un plateau 24 circulaire horizontal tournant autour d'un axe "B" vertical central. Le plateau 24 tournant présente ainsi un bord 25 extérieur circulaire représenté à la figure 4. La face supérieure du plateau 24 tournant délimite verticalement vers le bas le volume intérieur du bol 20 de centrifugeuse. Ainsi, le plateau 24 forme le fond du bol 20.

Le plateau 24 tournant présente un diamètre extérieur très supérieur aux dimensions des préformes 12.

Le plateau 24 tournant peut être entraîné en rotation à un régime constant, ici dans un sens horaire en vue de dessus, par exemple par un moteur (non représenté) qui est agencé sous le plateau 24 tournant. La vitesse de rotation est par exemple commandée de manière que le bord 25 extérieur du plateau 24 tournant se déplace entre 2 et 3 m/s.

Cependant, la vitesse de rotation du plateau 24 tournant peut être régulée en fonction de la quantité de préformes accumulées dans le convoyeur 22 de sortie. Cette quantité de préformes peut être détectée par des capteurs (non représentés) se trouvant dans le convoyeur 22 de sortie. En d'autres termes, si la quantité de préformes 12 dans le convoyeur 22 de sortie n'est pas suffisante pour alimenter la station de traitement suivante, alors la vitesse de rotation du plateau 24 peut être augmentée. On peut aussi faire varier la quantité de préformes alimentant le plateau 24 tournant.

Le plateau 24 tournant est ici porté par une table 26 de support qui est fixée au sol. La table 26 de support présente des pieds qui sont avantageusement réglables en hauteur pour permettre de régler l'assiette du plateau 24 tournant.

Le volume intérieur du bol 20 de centrifugeuse est délimité radialement vers l'extérieur par une rambarde 28 périphérique fixe qui est ici fixée à la table 26 de support. Cette rambarde 28 a notamment pour première fonction de retenir les préformes 12 projetées vers l'extérieur par la force centrifuge produite par la rotation du plateau 24 tournant, et pour deuxième fonction de guider le déplacement des préformes 12 jusqu'à un passage 32 de sortie du bol 20 qui est ménagé dans la rambarde 28, comme cela est visible notamment à la figure 5.

Les préformes 12 sont destinées à être déversées en vrac sur le plateau 24 tournant par l'intermédiaire d'un déversoir 30 fixe. Le déversoir 30 est ici agencé au centre du plateau 24 tournant. Le déversoir 30 est conçu pour déverser les préformes 12 en vrac, radialement en direction d'une portion 28A de réception de la rambarde 28. Le déversoir 30 se présente ici sous la forme d'un toboggan alimenté en préformes 12 par le haut par l'intermédiaire d'un tapis élévateur (non représenté). Le haut du déversoir 30 présente néanmoins une hauteur relativement faible, par exemple à environ 40 cm au-dessus du plateau 24.

Comme cela est illustré à la figure 3, pour les besoins de la description, on divisera le bol en trois secteurs angulaires fixes par rapport à la table 26 de support.

Un premier secteur 20A angulaire d'alignement des préformes 12 s'étend face à la sortie du déversoir 30. Ce secteur 20A angulaire d'alignement inclut la portion 28A de réception de la rambarde 28.

Un deuxième secteur 20B angulaire de redressement des préformes 12 alignées est agencé directement en aval du premier secteur 20A angulaire d'alignement. De manière non limitative, il s'étend ici globalement sur 180°.

Un troisième secteur 20C angulaire de sortie des préformes 12 correctement positionnées est agencé directement en aval du deuxième secteur 20B angulaire de redressement et directement en amont du premier secteur 20A angulaire d'alignement. A l'extrémité aval de ce secteur 20C de sortie, le passage 32 de sortie des préformes 12 est ouvert dans la rambarde 28 pour permettre de guider les préformes 12 correctement positionnées vers le convoyeur 22. Le convoyeur 22 passe ici derrière la portion 28A de réception de la rambarde 28.

La dénomination de chacun de ces secteurs 20A, 20B, 20C fournit une indication sur leur fonction. On comprendra par la suite que des préformes 12 incorrectement alignées au niveau du premier secteur 20A d'alignement peuvent néanmoins être alignées et redressées au niveau du deuxième secteur 20B angulaire selon les circonstances.

Sur toute la périphérie du premier secteur 20A angulaire d'alignement, un jeu de fonctionnement est réservé entre la rambarde 28 et le plateau 24 tournant. Ce jeu permet la rotation du plateau 24 tournant, mais il est toutefois suffisamment faible pour permettre à la rambarde 28 de retenir la totalité de la préforme 12 à l'intérieur du bol 20. Ce jeu est ainsi inférieur au diamètre "D3" minimal du corps 14 de la préforme 12.

Comme représenté à la figure 4, sur ce secteur 20A d'alignement, la rambarde 28 s'étend ici verticalement au-dessus du plateau 24 tournant, de manière que le bord 25 extérieur du plateau 24 tournant est agencé à l'extérieur du bol 20 de centrifugeuse.

En cours de fonctionnement du dispositif 10, comme représenté aux figures 5 et 6, lors d'une première étape de déversement, les préformes 12 déversées en vrac par le déversoir 30 sont projetées radialement contre une portion 28A de réception de la rambarde 28 sous l'effet conjugué de leur vitesse radiale de glissement en sortie du déversoir 30 et de la force centrifuge produite par la rotation du plateau 24 tournant. Dans le même temps, le plateau 24 tournant commence aussi à entraîner dans sa rotation les préformes 12 tangentiellement vers l'aval.

Lors d'une deuxième étape d'alignement, les préformes 12 sont maintenues à l'intérieur du bol 20 par la rambarde 28, puis, après un ou plusieurs rebonds contre la rambarde 28, les préformes 12 perdent progressivement de la vitesse selon la direction radiale. Elles sont alors constamment maintenues radialement contre la rambarde par la force centrifuge. On a représenté le trajet suivi par une même préforme 12 à la figure 6 depuis son arrivée via le déversoir 30 jusqu'à sa position stable contre la rambarde 28. Les préformes 12 sont alors entraînées en déplacement purement tangentiel dans un sens horaire par le plateau 24 tournant le long de la rambarde 28.

Dans cette configuration, les préformes 12 occupent naturellement la position la plus stable dans laquelle leur axe "A" principal est orienté selon une direction tangente par rapport au plateau 24 tournant.

La plupart des préformes 12 présentes dans le secteur 20A angulaire d'alignement du bol 20 sont ainsi alignées tangentiellement contre la rambarde 28, leur axe "A" principal étant orienté sensiblement tangentiellement à leur direction de déplacement. L'écart tangentiel entre deux préformes 12 correctement alignées successives est aléatoire car le plateau 24 tournant est parfaitement plan et ne présente pas de crans d'indexation des préformes 12. Les préformes 12 peuvent ainsi être en contact par leurs extrémités sous l'effet de la force centrifuge qui oblige les préformes 12 à glisser les unes par rapport aux autres. Les préformes 12 occupent ainsi de manière optimal toute la longueur périphérique du bol 20.

Le fait que les préformes 12 soient maintenues sur le plateau 24 tournant permet de les maintenir plaquées radialement contre la rambarde 28. Ainsi, les préformes 12 sont guidées de manière stable par la rambarde 28 durant leur déplacement autour du bol 20.

A ce stade, les préformes 12 sont orientées aléatoirement col vers l'amont ou vers l'aval sans incidence pour la suite du procédé. Les préformes 12 ainsi alignées poursuivent leur déplacement périphérique dans le secteur 20B de redressement.

Comme représenté à la figure 7, sur le deuxième secteur 20B angulaire de redressement du bol 20 de centrifugeuse, le bol 20 présente un interstice 34 périphérique formé par écartement radial de la rambarde 28 par rapport au bord 25 extérieur du plateau 24 tournant. La largeur radiale de l'interstice 34 est comprise entre le diamètre "D2" maximal du corps 14 et le diamètre "D1" de la face 18 de support, dans le cas présent de la collerette. Cet interstice 34 se prolonge jusqu'au passage 32 de sortie des préformes 12.

Au moins tout le long du deuxième secteur 20B de redressement, la rambarde 28 présente un rail 36 de support de la face 18 de support. Le rail 36 s'étend en saillie radialement vers l'intérieur au même niveau que la face supérieure du plateau 24 tournant pour délimiter l'interstice 34 vers l'extérieur. Le rail 36 se prolonge ici jusqu'au passage 32 de sortie.

Ainsi, les préformes 12 sont susceptibles d'être soutenues par leur face 18 de support, dans le cas présent par leur collerette, qui repose en deux points diamétralement opposée sur la face supérieure horizontale du plateau 24 tournant, d'une part, et sur une face supérieure horizontale du rail 36, d'autre part, le corps 14 des préformes 12 étant sous le niveau du plateau 24 tournant à travers ledit interstice 34. Les deux points d'appui sont alignés radialement. Le rail 36 permet de soutenir les préformes 12 de manière stable.

Ainsi, lors d'une troisième étape de redressement, comme représenté aux figures 8 et 9, les préformes 12 alignées lors de la deuxième étape arrivent depuis le premier secteur 20A d'alignement en étant alignées en position allongée en une file le long de la rambarde 28, leur axe "A" principal orienté tangentiellement. Les préformes 12 alignées sont disposées aléatoirement col 16 en amont ou col 16 en aval sans que cela n'ait d'influence sur leur redressement.

Lorsque le corps 14 de chaque préforme 12 arrive au-dessus de l'interstice 34, le corps 14 commence à tomber, comme représenté aux figures 10 et 11, faisant ainsi basculer la préforme 12 autour d'un axe radial passant par les points d'appui de la face 18 de support, dans le cas présent de la collerette, de la préforme 12. Le basculement se poursuit jusqu'à ce que l'axe "A" principal de la préforme 12 soit vertical, éventuellement après quelques balancement autour de l'axe radial. La préforme 12 est alors soutenues par sa face 18 de support reposant conjointement sur le rail 36 et sur le plateau 24 tournant, comme indiqué aux figures 12 et 13. La préforme 12 est ainsi redressée, col 16 en haut. La préforme 12 ainsi correctement positionnée est guidée extérieurement par le rail 36 de la rambarde 28, et elle est guidée intérieurement par le bord 25 extérieur du plateau 24 tournant.

Lors du basculement, l'axe "A" principal de la préforme 12 demeure dans un plan vertical tangent au déplacement. Du fait du basculement de l'axe "A" principal dans le sens de déplacement des préformes 12, la face 18 de support de chaque préforme 12 demeure en permanence en contact avec le plateau 24 tournant d'une part, et le rail 36 d'autre part, par ses deux points d'appui. Ainsi, chaque préforme 12 est guidée de manière stable et efficace durant son redressement.

Comme représenté à la figure 11, une zone de transition est prévue à l'extrémité amont du secteur 20B angulaire de redressement. Dans cette zone de transition, l'interstice 34 est élargi progressivement jusqu'à atteindre sa largeur finale. Pour ce faire, la rambarde 28 s'éloigne radialement progressivement de l'axe "B" de rotation du plateau 24 tournant. Ceci permet aux préformes 12 alignées de rester constamment en contact avec la rambarde 28 sous l'effet de la force centrifuge. Les préformes 12 sont ainsi guidées de manière stables en position alignée même pendant leur redressement.

Si la rambarde 28 présentait une discontinuité, elle ne pourrait plus remplir son rôle de guidage au niveau de cette discontinuité. Les préformes 12 alignées risqueraient alors de tressauter de se retrouver mal positionnées, venant par exemple en biais en appui contre des préformes adjacentes et empêchant leur redressement.

Les préformes 12 correctement positionnées, c'est-à-dire ainsi alignées et redressées, sont entraînées en rotation autour de leur axe principal par frottement contre le bord 25 extérieur du plateau 24 périphérique. Les préformes 12 correctement positionnées sont déplacées à la périphérie du bol 20 dans le sens de rotation du plateau 24 tournant par roulement contre la rambarde 28 périphérique.

Pour améliorer ce phénomène de roulement des préformes 12 correctement positionnées et ainsi augmenter leur vitesse d'avancement autour du plateau 24, le bord 25 extérieur du plateau 24 tournant comporte avantageusement une bande 38 de roulement qui présente un coefficient de frottement adapté pour permettre le roulement sans glissement du corps 14 de la préforme 12 contre la bande 38 de roulement. Un tel agencement est par exemple représenté à la figure 7.

Les préformes 12 correctement positionnées sont ainsi acheminées vers le troisième secteur 20C de sortie. Le troisième secteur 20C de sortie comporte une zone périphérique qui est protégée par un déflecteur 44 fixe qui est agencé au-dessus du plateau 24 tournant à une distance verticale inférieure à celle du diamètre "D3" minimal du corps 14 des préformes 12 pour empêcher des préformes 12N incorrectement positionnées de venir au contact de la file de préformes 12 correctement positionnées dans l'interstice 34. Comme cela est représenté à la figure 3, le déflecteur 44 s'étend en bras de spirale depuis une extrémité 44A amont qui est agencée au niveau du bord 25 extérieur du plateau 24 tournant, jusqu'à une extrémité 44B aval agencée à proximité du centre du plateau 24 tournant en aval du passage 32 de sortie. L'extrémité 44A amont du déflecteur 44 est écartée radialement de la rambarde 28 de manière à réserver un passage 46 suffisant pour laisser passer les préformes 12 correctement positionnées.

Le déflecteur 44 garantit ainsi que dans la zone protégée située entre la face aval du déflecteur 44 et la rambarde 28, aucune préforme 12N incorrectement positionnée n'est couchée sur le plateau 24 tournant.

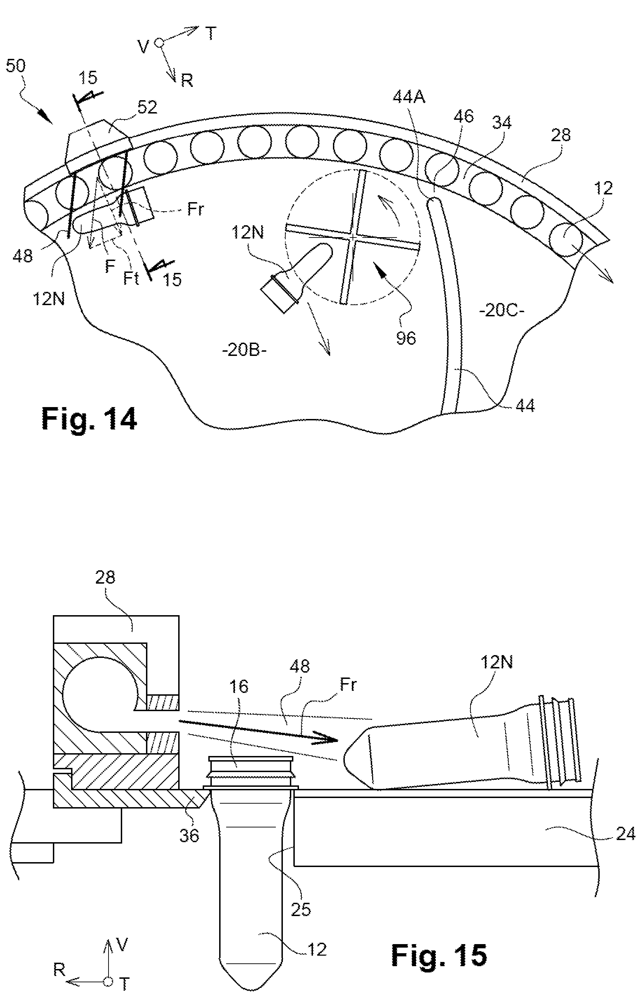

Pour éviter que des préformes 12N incorrectement positionnée n'entrent dans la zone protégée par le passage 46 ou qu'elles ne provoquent un embouteillage en bloquant le passage 46, l'invention propose de souffler au moins un jet 48 de gaz comprimé, notamment de l'air comprimé, depuis la périphérie extérieure du bol 20 de centrifugeuse. Plus particulièrement, le jet 48 de gaz est ici émis depuis la périphérie extérieure du secteur 20B angulaire de redressement, en amont du passage 46, comme cela est représenté aux figures 14 et 15.

Le jet 48 de gaz est émis selon une direction "F" principale qui présente au moins une composante "Fr" radiale dirigée vers le centre du plateau 24 tournant, dite composante centripète, comme cela est illustré à la figure 15. Le jet 48 de gaz passe au-dessus du col 16 des préformes 12 correctement positionnées pour chasser des préformes 12N incorrectement positionnées vers le centre du plateau 24 tournant.

En effet, les préformes 12 présentent généralement un col dont la hauteur axiale est inférieure au plus grand diamètre de la préforme 12. Ainsi, une préforme 12N incorrectement positionnée occupant une position allongée ou incomplètement redressée présentera une portion supérieure qui s'étendra au-dessus du buvant d'une préforme 12 correctement positionnée. Cette portion supérieure sera donc exposée au jet 48 de gaz tandis que les préformes 12 correctement positionnées passeront entièrement au-dessous du jet 48 de gaz.

En outre, comme cela est illustré à la figure 15, le jet 48 de gaz présente, en section radiale verticale, une divergence qui permet à une partie inférieure du jet 48 de gaz de plonger vers le plateau 24 tournant derrière les préformes 12 correctement positionnées pour chasser plus efficacement les préformes 12N incorrectement positionnées qui sont allongées sur le plateau 24 tournant.

On a constaté que ce procédé pour chasser les préformes 12N incorrectement positionnées était plus efficace lorsque le jet 48 de gaz est émis selon une direction principale "F" qui, en plus de la composante "Fr" centripète, présente une composante "Ft" tangentielle dirigée à contresens par rapport au sens de rotation du plateau 24 tournant, comme cela est illustré à la figure 14. En effet, les préformes 12N incorrectement positionnées subissent non seulement une force centrifuge, mais aussi une force tangentielle de frottement avec le plateau 24 tournant. Le jet 48 de gaz chasse les préformes 12N incorrectement positionnées avec une force qui surpasse l'ensemble de ces forces subies, permettant de chasser efficacement les préformes 12N incorrectement positionnées vers le centre du plateau 24 tournant, et plus particulièrement, en direction du premier secteur 20A angulaire d'alignement. Ainsi, les préformes 12N chassées ont de fortes probabilités de se retrouver correctement positionnées lors d'un nouveau tour du bol 20 de centrifugeuse.

Dans l'exemple représenté à la figure 3, plusieurs jets 48 de gaz, ici quatre, sont émis le long d'une portion d'extrémité aval du secteur 20B angulaire de redressement. Au moins l'un des jets 48 de gaz est soufflé depuis une zone située à proximité de l'extrémité aval du secteur 20B de redressement, et plus particulièrement à proximité du passage 46, afin de garantir qu'aucune préforme 12N incorrectement positionnée ne pénètre dans la zone protégée.

L'émission d'un tel jet 48 de gaz présente de nombreux avantages.

Ainsi, les préformes 12N incorrectement positionnées ne sont pas chassées par percussion avec un élément solide, ce qui permet d'éviter toute dégradation de la préforme, mais aussi l'usure d'un tel élément solide.

De plus, le jet 48 de gaz permet non seulement de chasser les préformes 12N incorrectement positionnées qui sont allongées sur le plateau 24 tournant contre les préformes 12 correctement positionnées, mais aussi les préformes 12N incorrectement positionnées qui sont emboîtées dans des préformes 12 correctement positionnées. Le col 16 de telles préformes 12N emboîtées passe en effet sur la trajectoire du jet 48 de gaz.

Le jet 48 de gaz est soufflé de façon continue de manière à pouvoir chasser toutes les préformes 12N incorrectement positionnées à tout moment.

En variante le jet de gaz est émis par impulsions de fréquence suffisamment élevée pour garantir que toutes les préformes 12N incorrectement positionnées passant à portée seront exposées au jet 48 de gaz.

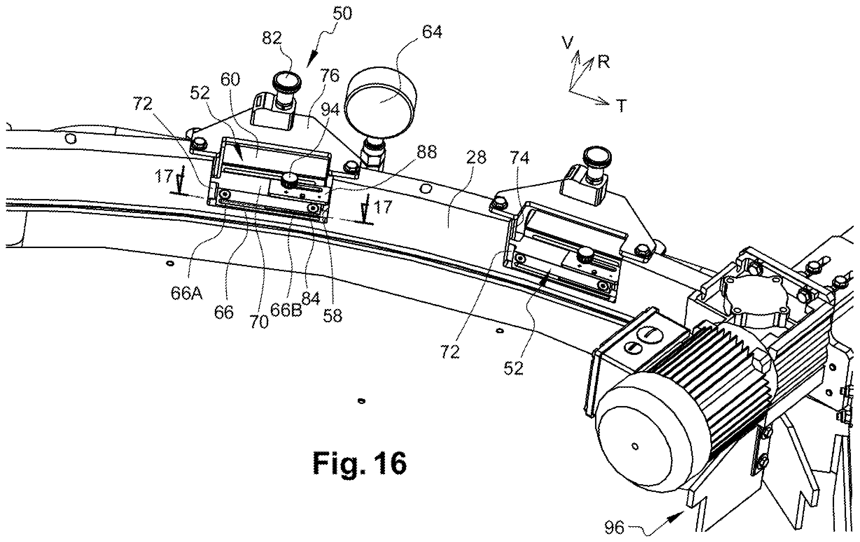

On a représenté plus en détails à la figure 16 un dispositif 50 de soufflage du jet 48 de gaz comprimé. Le dispositif 50 de soufflage comporte principalement une buse 52 de soufflage du jet 48 de gaz comprimé qui est montée sur un élément de support fixe par rapport à la table 26 de support et une source 57 de gaz comprimé qui alimente la buse 52.

Dans l'exemple représenté à la figure 3, plusieurs buses 52 sont agencées sur le pourtour du bol 20 de centrifugeuse. Ces buses 52 présentent une structure identique et un fonctionnement similaire. Une seule buse 52 sera donc décrite par la suite. Les buses 52 sont ici alimentées par une source 57 commune de gaz comprimé.

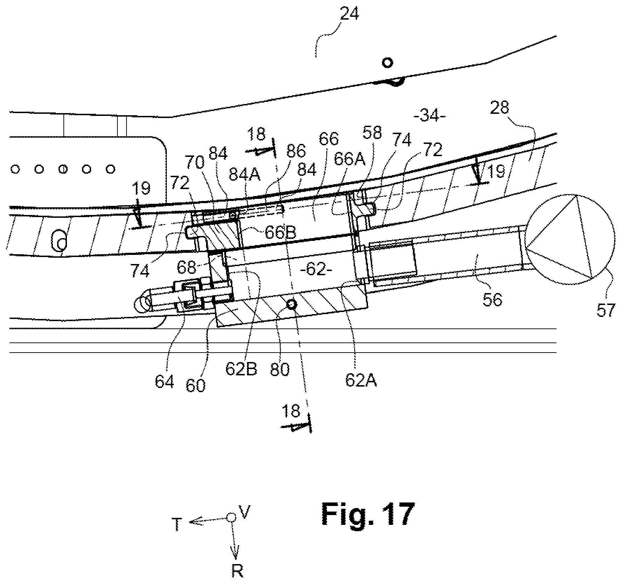

La source 57 de gaz comprimé est par exemple formée par un compresseur, représenté de manière schématique à la figure 17, qui est relié à la buse 52 par l'intermédiaire d'une conduite 56 d'alimentation; comme cela est représenté à la figure 17.

La buse 52 comporte un corps 60 qui renferme une chambre 62. La chambre 62 présente ici une forme allongée dans une direction tangentielle qui est délimitée tangentiellement entre une paroi 62A amont verticale radiale et une paroi 62B aval verticale radiale. De manière non limitative, dans l'exemple de la figure 17, la conduite 56 d'alimentation est raccordée à la paroi 62A amont de la chambre 62.

En variante non représentée de l'invention, la conduite est raccordée à la paroi aval de la chambre.

De manière optionnelle, la buse 52 est ici munie d'un manomètre 64 qui est raccordé à la chambre 62 afin de permettre un contrôle visuel de la pression du gaz comprimé.

La chambre 62 débouche radialement vers le bol 20 de centrifugeuse par l'intermédiaire d'un orifice de sortie. L'orifice de sortie présente ici sous la forme d'une fente 66 de sortie horizontale dont la longueur s'étend dans une direction tangentielle. Ainsi, le jet 48 de gaz présente avantageusement une forme de lame d'air qui permet d'intercepter un plus grand nombre de préformes 12 qu'un jet de gaz plus étroit. La fente 66 s'étend depuis une extrémité 66A amont jusqu'à une extrémité 66B aval. L'extrémité 66A amont est sensiblement dans le prolongement de la paroi 62A amont de la chambre 62, tandis que l'extrémité 66B aval est décalée tangentiellement vers l'amont par rapport à la paroi 62B aval de la chambre 62. Ainsi, un tronçon d'extrémité aval de la chambre 62 forme un cul-de-sac 68 aval qui n'est pas ouvert radialement vers le bol 20 de centrifugeuse. La présence du cul-de-sac 68 aval permet de dévier le jet 48 de gaz radialement vers l'amont de manière que sa direction principale d'émission présente une composante tangentielle conformément aux enseignements de l'invention.

La fente 66 est ici agencée dans un bec 70 qui fait saillie radialement vers l'intérieur du bol 20 de centrifugeuse depuis le corps 60 de la buse 52. Le bec 70 est fixé au corps 60.

La buse 52 est ici située radialement à l'extérieur du bol. L'élément de support est ici formé par la rambarde 28. Plus particulièrement, la buse 52 est ici agencée dans une ouverture 58 qui traverse radialement la rambarde 28. L'ouverture 58 est ici débouchante vers le haut de la rambarde 28. Ainsi, la buse 52 est située au plus proche de la file de préformes 12 correctement positionnées.

Le dispositif 10 d'alignement est destiné à traiter des lots de préformes 12 de formats différents. En particulier, le poids et la hauteur du col 16 des préformes sont susceptibles de varier d'un format à l'autre.

Pour permettre d'adapter la hauteur de la buse 52 en fonction de la hauteur du col 16 des préformes 12, la position de la buse 52 de soufflage est réglable en hauteur par rapport à la rambarde pour éviter que le jet 48 de gaz ne perturbe le défilement des préformes 12 correctement positionnées. Dans l'exemple représenté aux figures, la buse 52 est montée coulissante verticalement dans la rambarde 28. Le corps 60 de la buse 52 comporte ici deux oreilles 72 d'extrémité tangentielles qui sont reçues en coulissement dans des rainures 74 verticales associées de la rambarde 28 agencées de part et d'autre de l'ouverture 58.

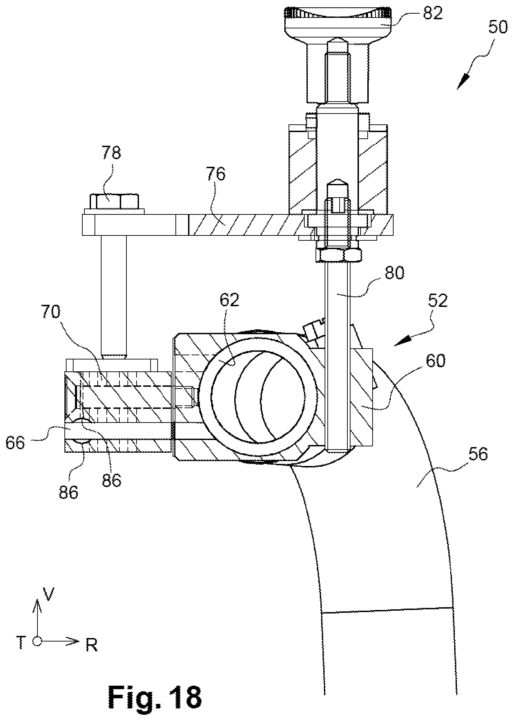

En outre, une platine 76 horizontale forme un pont au-dessus de l'ouverture 58. La platine 76 est fixée à la rambarde, ici au moyen de deux vis 78. Comme cela est particulièrement visible à la figure 18, une tige 80 verticale est montée à rotation autour de son axe et fixe verticalement dans la platine 76. Une portion filetée d'extrémité inférieure de la tige 80 est vissée dans un taraudage correspondant du corps 60 de la buse 52. La tige 80 est susceptible d'être entraînée en rotation par une poignée 82 fixée à une extrémité supérieure de la tige 80, au-dessus de la platine 76 pour commander la position verticale du corps 60 de la buse 52 par rapport à la rambarde 28. Ainsi, la tige 80 a pour fonction de commander le coulissement vertical de la buse 52, et de maintenir la buse 52 dans la position verticale sélectionnée.

Par ailleurs, il est préférable de pouvoir adapter la puissance du jet 48 de gaz en fonction du poids des préformes 12. En effet, un jet 48 de gaz trop peu puissant ne permettrait pas de chasser efficacement les préformes 12N incorrectement positionnées, tandis qu'un jet 48 de gaz trop puissant risquerait de propulser les préformes 12N incorrectement positionnées trop rapidement vers l'autre côté du bol 20 de centrifugeuse, avec un risque d'endommagement de préformes et/ou de certains composants du dispositif 10 d'alignement et de redressement.

A cet effet, le dispositif 50 de soufflage comporte des moyens de régulation de la puissance du jet 48 de gaz.

Dans le cas présent, la buse 52 de soufflage comporte un élément 84 d'obturation réglable de la section de passage du gaz pour permettre de régler la puissance du jet 48 de gaz. L'élément 84 d'obturation permet ainsi de modifier la section de passage du gaz dans la fente 66 de sortie.

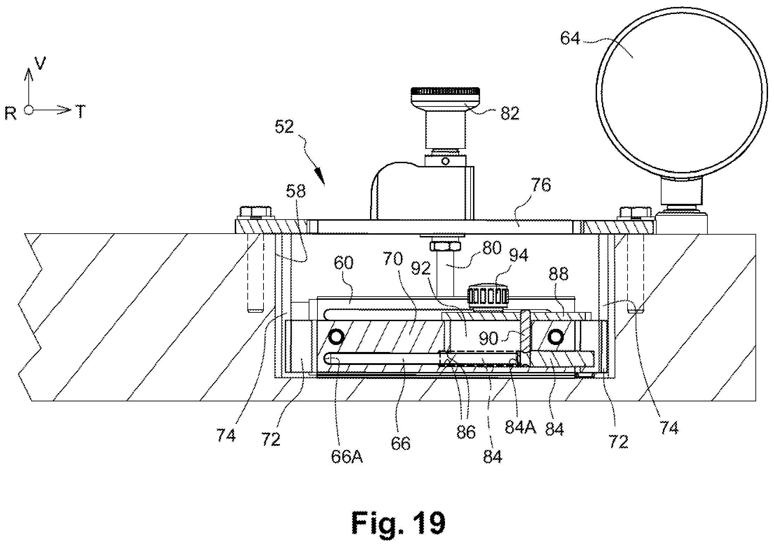

Comme cela est particulièrement visible aux figures 17 et 19, l'élément 84 d'obturation est ici formé par une tige d'axe tangentiel, c'est-à-dire agencé dans le sens de la longueur de la fente 66 de sortie. L'élément 84 d'obturation est monté coulissant selon une direction tangentielle dans la fente 66 de sortie. A cet effet, le bec 70 présente des coulisses 86 tangentielle de guidage agencées verticalement de part et d'autre de la fente 66 qui reçoivent l'élément 84 d'obturation en coulissement.

L'élément 84 d'obturation présente une hauteur suffisante pour bloquer le passage de gaz dans la fente 66. La section de passage du gaz dans la fente 66 est délimitée tangentiellement entre l'extrémité 66A amont de la fente 66 et une extrémité 84A amont libre de l'élément 84 d'obturation. Le réglage de la section de passage est commandé par coulissement de l'élément 84 d'obturation entre :
- une position extrême d'ouverture dans laquelle l'élément 84 d'obturation est rétractée, ici complètement, vers l'extrémité 66B aval de la fente 66, comme cela est représenté aux figures 17 et 19 en traits pleins ; et
- une position extrême de fermeture dans laquelle l'élément 84 d'obturation est étendu partiellement vers l'extrémité 66A amont de la fente 66, de manière à réduire la section de passage du gaz en augmentant la dimension tangentielle du cul-de-sac 68, comme cela est représenté en traits interrompus aux figures 17 et 19.

Dans le mode de réalisation représenté aux figures, la vitesse de sortie du gaz comprimé augmente progressivement à mesure du coulissement de l'élément 84 d'obturation depuis sa position extrême d'ouverture vers sa position extrême de fermeture. Ainsi, le jet 48 de gaz comprimé est plus puissant en position extrême de fermeture qu'en position extrême d'ouverture.

La pression du gaz comprimé alimentant la buse 52 est ici constante quel que soit le réglage de l'élément 84 d'obturation. La puissance du jet 48 de gaz est ainsi déterminée uniquement en fonction de la position qu'occupe l'élément 84 d'obturation entre ses deux positions extrêmes.

Selon une variante non représentée de l'invention, la puissance du jet de gaz peut aussi être commandée par régulation de la pression du gaz comprimé.

Pour permettre de commander sa position, l'élément 84 d'obturation est ici relié à une plaque 88 de commande qui est agencée sur une face supérieure du bec 70 de la buse 52. Comme représenté à la figure 19, la plaque 88 de commande est reliée à l'élément 84 d'obturation par l'intermédiaire d'une tige 90 de fixation montée coulissante dans une lumière 92 oblongue du bec 70. La plaque 88 de commande est susceptible d'être bloquée par serrage d'une vis 94 de freinage vissée dans le bec 70 afin de bloquer la plaque 88 de commande par serrage entre la tête de la vis 94 de freinage et la face supérieure du bec 70.

Le procédé et le dispositif 50 de soufflage réalisés selon les enseignements de l'invention permettent de chasser la quasi-totalité des préformes 12N incorrectement positionnées avant qu'elles n'atteignent le secteur 20C angulaire de sortie. Pour améliorer l'efficacité du procédé, l'invention propose d'agencer plusieurs dispositifs 50 de soufflage successivement dans une portion aval du secteur 20B angulaire de redressement s'étendant par exemple sur la moitié aval du secteur 20B angulaire de redressement.

Bien que ce procédé et le dispositif 50 de soufflage pour sa mise en œuvre soient extrêmement efficaces, il est bien entendu possible de le combiner avec d'autres moyens de triage des préformes incorrectement positionnées tels que les roues démêleuses primaire et/ou secondaires décrites dans la demande FR 3.035.090 A1.

On a représenté aux figures 14 et 16 une roue 96 démêleuse primaire qui est interposée entre le dernier dispositif 50 de soufflage et le déflecteur 44.

L'invention fournit ainsi un procédé très efficace pour réexpédier les préformes 12N incorrectement positionnées vers le secteur 20A angulaire d'alignement, et ce pour des préformes de formats variés et pour des débits de préformes très élevés. Le procédé permet en outre d'éviter d'endommager des préformes 12 et/ou des éléments du dispositif 10 d'alignement et de redressement.

## Revendications

1. Procédé de triage de préformes (12N) incorrectement alignée d'une file de préformes (12) correctement positionnées dans un dispositif (10) d'alignement en une file et de redressement de préformes qui comporte un bol (20) de centrifugeuse formé par :
- un plateau (24) circulaire horizontal tournant autour d'un axe (B) vertical ;
- une rambarde (28) périphérique fixe ;
- au moins un secteur (20B) angulaire de redressement des préformes (12) le long duquel le bol (20) présente un interstice (34) périphérique pour permettre le redressement de préformes (12) alignées par basculement d'un corps (14) des préformes (12) dans l'interstice (34) tandis que le col (16) est soutenu au-dessus de l'interstice (34) ;
- au moins un secteur (20C) angulaire de sortie des préformes (12) correctement positionnées qui est agencé en aval du secteur (20B) angulaire de redressement selon le sens de rotation du plateau (24) ;
**caractérisé en ce que** le procédé consiste à souffler au moins un jet (48) de gaz comprimé depuis la périphérie extérieure du bol (20) de centrifugeuse vers l'intérieur du bol (20) de centrifugeuse.

2. Procédé selon la revendication précédente, **caractérisé en ce que** le jet (48) de gaz est émis selon une direction (F) présentant au moins une composante radiale dirigée vers le centre du plateau (24), dite composante (Fr) centripète, le jet (48) de gaz passant au-dessus du col (16) des préformes (48) correctement positionnées pour chasser des préformes (12N) incorrectement positionnées vers le centre du plateau (24).

3. Procédé selon la revendication précédente, **caractérisé en ce que** le jet (48) de gaz est émis selon une direction (F) présentant, en plus de la composante (Fr) centripète, une composante (Ft) tangentielle dirigée à contresens par rapport au sens de rotation du plateau (24).

4. Procédé selon l'une quelconque des revendications précédentes, **caractérisé en ce que** le jet (48) de gaz est soufflé depuis une zone située à proximité de l'extrémité aval du secteur (20B) de redressement.

5. Procédé selon l'une quelconque des revendications précédentes, **caractérisé en ce que** le jet (48) de gaz est soufflé de façon continue.

6. Dispositif (10) d'alignement en une file et de redressement de préformes qui comporte un bol (20) de centrifugeuse formé par :
- un plateau (24) circulaire horizontal tournant autour d'un axe (B) vertical ;
- une rambarde (28) périphérique fixe ;
- au moins un secteur (20B) angulaire de redressement des préformes (12) le long duquel le bol (20) présente un interstice (34) périphérique pour permettre le redressement de préformes (12) alignées par basculement d'un corps (14) des préformes (12) dans l'interstice (34) tandis que le col (16) est soutenu au-dessus de l'interstice (34) ;
- au moins un secteur (20C) angulaire de sortie des préformes (12) correctement positionnées qui est agencé en aval du secteur (20B) angulaire de redressement selon le sens de rotation du plateau (24) ;
**caractérisé en ce qu'**il comporte au moins un dispositif (50) de soufflage qui comporte une buse (52) de soufflage du jet (48) de gaz comprimé qui est montée sur un élément de support fixe situé radialement à l'extérieur du bol (20) et une source (57) de gaz comprimé qui alimente la buse (52).

7. Dispositif (10) d'alignement en une file et de redressement de préformes selon la revendication précédente, **caractérisé en ce que** le dispositif (50) de soufflage comporte des moyens de régulation de la puissance du jet (48) de gaz.

8. Dispositif (10) d'alignement en une file et de redressement de préformes selon la revendication précédente, **caractérisé en ce que** les moyens de régulation comportent un élément (84) d'obturation réglable qui est agencé dans la buse (52) pour modifier la section de passage du gaz.

9. Dispositif (10) d'alignement en une file et de redressement de préformes selon la revendication précédente, **caractérisé en ce que** l'élément (84) d'obturation est monté coulissant.

10. Dispositif (10) d'alignement en une file et de redressement de préformes selon l'une quelconque des revendications 6 à 9, **caractérisé en ce que** la position de la buse (52) de soufflage est réglable en hauteur par rapport à l'élément de support.

11. Dispositif (10) d'alignement en une file et de redressement de préformes selon l'une quelconque des revendications 8 à 9, **caractérisé en ce que** la buse (52) comporte une chambre (62) de pression qui débouche à l'extérieur par l'intermédiaire d'une fente (66) de sortie horizontale qui s'étend depuis une paroi (62A) amont de la chambre (62) de pression jusqu'à une extrémité (84A) libre de l'élément (84) d'obturation, l'élément (84) d'obturation étant monté coulissant horizontalement pour permettre de modifier la section de passage du gaz.

## Patentansprüche

1. Verfahren zum Sortieren von fehlerhaft ausgerichteten Vorformlingen (12N) einer Reihe von richtig positionierten Vorformlingen (12) in einer Vorrichtung (10) zum Ausrichten in einer Reihe und zum Aufrichten von Vorformlingen, die eine Zentrifugenschale (20) umfasst, die gebildet wird durch:
- einen horizontalen kreisförmigen Teller (24), der um eine vertikale Achse (B) dreht;
- eine feststehende umfängliche Reling (28);
- mindestens einen Aufrichtungswinkelsektor (20B) für die Vorformlinge (12), entlang von welchem die Schale (20) einen umfänglichen Zwischenraum (34) aufweist, um das Aufrichten von ausgerichteten Vorformlingen (12) durch Kippen eines Körpers (14) der Vorformlinge (12) in den Zwischenraum (34), während der Hals (16) über dem Zwischenraum (34) gehalten wird, zu ermöglichen;
- mindestens einen Austrittswinkelsektor (20C) für die richtig positionierten Vorformlinge (12), der stromab des Aufrichtungswinkelsektors (20B) gemäß der Drehrichtung des Tellers (24) ausgebildet ist;
**dadurch gekennzeichnet, dass** das Verfahren darin besteht, mindestens einen Strahl (48) eines komprimierten Gases vom äußeren Umfang der Zentrifugenschale (20) zum Innenraum der Zentrifugenschale (20) zu blasen.

2. Verfahren nach dem vorhergehenden Anspruch, **dadurch gekennzeichnet, dass** der Strahl (48) eines Gases entlang einer Richtung (F) ausgestoßen wird, die mindestens eine zum Mittelpunkt des Tellers (24) hin gerichtete radiale Komponente, zentripetale Komponente (Fr) genannt, aufweist, wobei der Strahl (48) eines Gases über dem Hals (16) der richtig positionierten Vorformlinge (48) verläuft, um fehlerhaft positionierte Vorformlinge (12N) zum Mittelpunkt des Tellers (24) hin zu treiben.

3. Verfahren nach dem vorhergehenden Anspruch, **dadurch gekennzeichnet, dass** der Strahl (48) eines Gases entlang einer Richtung (F) ausgestoßen wird, die zusätzlich zu der zentripetalen Komponente (Fr) eine gegensinnig zu der Drehrichtung des Tellers (24) gerichtete tangentiale Komponente (Ft) aufweist.

4. Verfahren nach einem der vorhergehenden Ansprüche, **dadurch gekennzeichnet, dass** der Strahl (48) eines Gases von einem in der Nähe des stromabwärtigen Endes des Aufrichtungssektors (20B) gelegenen Bereich aus geblasen wird.

5. Verfahren nach einem der vorhergehenden Ansprüche, **dadurch gekennzeichnet, dass** der Strahl (48) eines Gases kontinuierlich geblasen wird.

6. Vorrichtung (10) zum Ausrichten in einer Reihe und zum Aufrichten von Vorformlingen, die eine Zentrifugenschale (20) umfasst, die gebildet wird durch:
- einen horizontalen kreisförmigen Teller (24), der um eine vertikale Achse (B) dreht;
- eine feststehende umfängliche Reling (28);
- mindestens einen Aufrichtungswinkelsektor (20B) für die Vorformlinge (12), entlang von welchem die Schale (20) einen umfänglichen Zwischenraum (34) aufweist, um das Aufrichten von ausgerichteten Vorformlingen (12) durch Kippen eines Körpers (14) der Vorformlinge (12) in den Zwischenraum (34), während der Hals (16) über dem Zwischenraum (34) gehalten wird, zu ermöglichen;
- mindestens einen Austrittswinkelsektor (20C) für die richtig positionierten Vorformlinge (12), der stromab des Aufrichtungswinkelsektors (20B) gemäß der Drehrichtung des Tellers (24) ausgebildet ist;
**dadurch gekennzeichnet, dass** sie mindestens eine Blasvorrichtung (50) umfasst, die eine Düse (52) zum Blasen des Strahls (48) eines komprimierten Gases umfasst, die an einem feststehenden Halterungselement montiert ist, das radial an der Außenseite der Schale (20) gelegen ist, und eine Quelle (57) für komprimiertes Gas, die die Düse (52) versorgt.

7. Vorrichtung (10) zum Ausrichten in einer Reihe und zum Aufrichten von Vorformlingen nach dem vorhergehenden Anspruch, **dadurch gekennzeichnet, dass** die Blasvorrichtung (50) Mittel zur Regulierung der Leistung des Strahls (48) eines Gases umfasst.

8. Vorrichtung (10) zum Ausrichten in einer Reihe und zum Aufrichten von Vorformlingen nach dem vorhergehenden Anspruch, **dadurch gekennzeichnet, dass** die Mittel zur Regulierung ein verstellbares Verschlusselement (84) umfassen, das in der Düse (52) ausgebildet ist, um den Durchlassquerschnitt des Gases zu ändern.

9. Vorrichtung (10) zum Ausrichten in einer Reihe und zum Aufrichten von Vorformlingen nach dem vorhergehenden Anspruch, **dadurch gekennzeichnet, dass** das Verschlusselement (84) verschiebbar montiert ist.

10. Vorrichtung (10) zum Ausrichten in einer Reihe und zum Aufrichten von Vorformlingen nach einem der Ansprüche 6 bis 9, **dadurch gekennzeichnet, dass** die Position der Blasdüse (52) in Bezug auf das Halterungselement höhenverstellbar ist.

11. Vorrichtung (10) zum Ausrichten in einer Reihe und zum Aufrichten nach einem der Ansprüche 8 bis 9, **dadurch gekennzeichnet, dass** die Düse (52) eine Druckkammer (62) umfasst, die an der Außenseite über einen horizontalen Austrittsschlitz (66) mündet, der sich von einer stromaufwärtigen Wand (62A) der Druckkammer (62) aus bis zu einem freien Ende (84A) des Verschlusselements (84) erstreckt, wobei das Verschlusselement (84) horizontal verschiebbar montiert ist, um das Ändern des Durchlassquerschnitts des Gases zu ermöglichen.

## Claims

1. Method for sorting incorrectly aligned preforms (12N) from a row of correctly positioned preforms (12) in a device (10) for aligning preforms in a row and straightening preforms, which comprises a centrifuge bowl (20) formed **by:**
- a horizontal circular turntable (24) turning about a vertical axis (B);
- a fixed peripheral guard-bar (28);
- at least one angular sector (20B) for straightening the preforms (12) along which the bowl (20) has a peripheral gap (34) in order to allow the straightening of preforms (12), which are aligned by a body (14) of the preforms (12) being tilted into the gap (34) while the neck (16) is supported above the gap (34);
- at least one angular outlet sector (20C) for the correctly positioned preforms (12), which is arranged downstream of the angular straightening sector (20B) in the direction of rotation of the turntable (24);
**characterized in that** the method consists in blowing at least one jet (48) of compressed gas from the outer periphery of the centrifuge bowl (20) towards the inside of the centrifuge bowl (20).

2. Method according to the preceding claim, **characterized in that** the jet (48) of gas is released in a direction (F) having at least one radial component directed towards the centre of the turntable (24), referred to as centripetal component (Fr), the jet (48) of gas passing above the neck (16) of the correctly positioned preforms (48) in order to force incorrectly positioned preforms (12N) towards the centre of the turntable (24).

3. Method according to the preceding claim, **characterized in that** the jet (48) of gas is released in a direction (F) having, in addition to the centripetal component (Fr), a tangential component (Ft) directed counter to the direction of rotation of the turntable (24).

4. Method according to any one of the preceding claims, **characterized in that** the jet (48) of gas is blown from a region situated near the downstream end of the straightening sector (20B).

5. Method according to any one of the preceding claims, **characterized in that** the jet (48) of gas is blown continuously.

6. Device (10) for aligning preforms in a row and straightening preforms, which comprises a centrifuge bowl (20) formed **by:**
- a horizontal circular turntable (24) turning about a vertical axis (B);
- a fixed peripheral guard-bar (28);
- at least one angular sector (20B) for straightening the preforms (12) along which the bowl (20) has a peripheral gap (34) in order to allow the straightening of preforms (12), which are aligned by a body (14) of the preforms (12) being tilted into the gap (34) while the neck (16) is supported above the gap (34);
- at least one angular outlet sector (20C) for the correctly positioned preforms (12), which is arranged downstream of the angular straightening sector (20B) in the direction of rotation of the turntable (24);
**characterized in that** it comprises at least one blowing device (50) comprising a nozzle (52) for blowing the jet (48) of compressed gas, said nozzle being mounted on a fixed support element situated radially outside the bowl (20) and a source (57) of compressed gas that supplies the nozzle (52).

7. Device (10) for aligning preforms in a row and straightening preforms according to the preceding claim, **characterized in that** the blowing device (50) comprises means for regulating the power of the jet (48) of gas.

8. Device (10) for aligning preforms in a row and straightening preforms according to the preceding claim, **characterized in that** the regulating means comprise an adjustable shut-off element (84), which is arranged in the nozzle (52) in order to modify the gas passage section.

9. Device (10) for aligning preforms in a row and straightening preforms according to the preceding claim, **characterized in that** the shut-off element (84) is mounted so as to slide.

10. Device (10) for aligning preforms in a row and straightening preforms according to any one of Claims 6 to 9, **characterized in that** the position of the blowing nozzle (52) is height-adjustable in relation to the support element.

11. Device (10) for aligning preforms in a row and straightening preforms according to either one of Claims 8 and 9, **characterized in that** the nozzle (52) comprises a pressure chamber (62) that opens towards the outside via a horizontal outlet slot (66) that extends from an upstream wall (62A) of the pressure chamber (62) to a free end (84A) of the shut-off element (84), the shut-off element (84) being mounted so as to slide horizontally in order to allow the gas passage section to be modified.
